# EUROPÄISCHE PATENTSCHRIFT

(11) **EP 2 032 249 B1**
(45) Veröffentlichungstag und Bekanntmachung des Hinweises auf die Patenterteilung: **07.10.2009**
(21) Anmeldenummer: 07785536.9
(22) Anmeldetag: 12.06.2007
(51) Int. Cl.: B01J 19/24, C01B 3/36

(54) **REFORMER FÜR EIN BRENNSTOFF ZELLENSYSTEM**
REFORMER FOR A FUEL CELL SYSTEM
REFORMEUR POUR UN SYSTÈME À PILE À COMBUSTIBLE

(30) Priorität: 29.06.2006 DE 102006029917
(43) Veröffentlichungstag der Anmeldung: 11.03.2009
(73) Patentinhaber: Enerday GmbH, 82131 Stockdorf (DE)
(72) Erfinder: BOLTZE, Matthias, 17039 Neuendorf (DE); ROZUMEK, Michael, 17033 Neubrandenburg (DE); KÄDING, Stefan, 17309 Zerrenthin (DE); LINDERMEIR, Andreas, 38642 Goslar/Oker (DE); GÜNTHER, Norbert, 18311 Ribnitz (DE); LAWRENCE, Jeremy, 01277 Dresden (DE); REINERT, Andreas, 01277 Dresden (DE); MÜHLNER, Marco, 19374 Raduhn (DE); KAH, Stefan, 30169 Hannover (DE)
(74) Vertreter: Schumacher, Dirk
(86) Internationale Anmeldenummer: PCT/DE2007/001035
(87) Internationale Veröffentlichungsnummer: WO 2008/000216

(56) Entgegenhaltungen:
- EP-A- 1 471 590
- US-A1- 2006 029 856

## Beschreibung

Die Erfindung betrifft einen Reformer für ein Brennstoffzellensystem zum Erzeugen eines Reformats, umfassend mehrere Funktionseinheiten zum Behandeln des Brennstoffs, wobei zumindest eine Funktionseinheit auf eine erste Brennstoffart abgestimmt ist.

Darüber hinaus betrifft die Erfindung eine Funktionseinheit für solch einen Reformer, ein Brennstoffzellensystem mit einem solchen Reformer und ein Kraftfahrzeug mit solch einem Brennstoffzellensystem.

Brennstoffzellensysteme dienen in allgemein bekannter Weise der Umwandlung von chemischer Energie in elektrische Energie. Brennstoffzellensysteme müssen in der Lage sein, in der Praxis übliche Brennstoffe zu verarbeiten. Da in einer Brennstoffzelle Wasserstoff und Sauerstoff umgesetzt werden, muss der verwendete Brennstoff so aufbereitet werden, dass das der Anode des Brennstoffzellenstapels zugeführte Gas einen möglichst hohen Anteil an Wasserstoff besitzt. Katodenseitig wird in den meisten Fällen Luftsauerstoff an den Brennstoffzellenstapel zugeführt. Zu diesem Zweck werden einem Reformer Brennstoff und ein Oxidationsmittel, vorzugsweise Luft, zugeführt. In dem Reformer erfolgt dann eine Umsetzung des Brennstoffs mit dem Sauerstoff, wobei vorzugsweise das Verfahren der partiellen Oxidation durchgeführt wird. Ein in herkömmlicher Weise aufgebauter Reformer ist beispielsweise in DE 101 20 375 A1 beschrieben.

Das so erzeugte Reformat wird dann der Brennstoffzelle beziehungsweise einem Brennstoffzellenstapel zugeführt, wobei durch die kontrollierte Umsetzung von Wasserstoff, als Bestandteil des Reformats, und Sauerstoff elektrische Energie freigesetzt wird.

Unabhängig von der Art des verwendeten Brennstoffes ist stets das Ziel, einen möglichst hohen Wasserstoffanteil im Reformat zu erlangen, welches dem Brennstoffzellenstapel zuzuführen ist. Dazu muss je nach verwendetem Brennstoff der Reformer auf diese Brennstoffart abgestimmt sein. Dies erfordert, dass die Hersteller solcher Brennstoffzellensysteme eine breite Palette an Brennstoffzellensystemen bereitstellen, die speziell auf die verschiedenen Brennstoffarten abgestimmt sind. Dies ist mit hohen Entwicklungs- und Herstellungskosten verbunden.

Es ist daher die Aufgabe der vorliegenden Erfindung, eine Möglichkeit zu schaffen, einen Reformer bereitzustellen, welcher relativ kostengünstig auf die verschiedenen Kraftstoffarten anpassbar ist.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Der erfindungsgemäße Reformer baut auf dem gattungsgemäßen Stand der Technik dadurch auf, dass die auf die erste Brennstoffart abgestimmte Funktionseinheit als lösbares Modul mittels einer Schnittstelle mit dem Reformer koppelbar ist, welche auch dazu ausgelegt ist, eine Austauschfunktionseinheit anstelle der auf die erste Brennstoffart abgestimmten Funktionseinheit mit dem Reformer zu koppeln, wobei die Austauschfunktionseinheit auf eine zweite Brennstoffart abgestimmt ist, die sich von der ersten Brennstoffart unterscheidet. Durch einen derartigen Aufbau wird ermöglicht, wesentliche Funktionseinheiten des Reformers bei Betrieb mit unterschiedlichen Brennstoffarten wieder zu verwenden. Dies ermöglicht auf eine sehr kostengünstige und einfache Weise, den Reformer auf verschiedene Anforderungen der unterschiedlichen Brennstoffarten anzupassen. Es ist demnach möglich, ein komplettes Brennstoffzellensystem durch einfaches Austauschen einer Funktionseinheit des Reformers optimal auf eine andere Brennstoffart anzupassen.

Dieselben Vorteile lassen sich dadurch erreichen, dass die auf die erste Brennstoffart abgestimmte Funktionseinheit und die Austauschfunktionseinheit eine Gasgemischbildungseinheit ist.

Insbesondere ist dabei vorgesehen, dass die Gasgemischbildungseinheit ein Verdampfer ist.

Außerdem lassen sich die vorstehend genannten Vorteile dadurch erreichen, dass die auf die erste Brennstoffart abgestimmte Funktionseinheit und die Austauschfunktionseinheit eine Reaktionseinheit ist.

Insbesondere ist dabei vorgesehen, dass die Reaktionseinheit ein Reformerbrenner ist.

Darüber hinaus kann der erfindungsgemäße Reformer dadurch weitergebildet sein, dass die Schnittstelle eine Schnellverbindung ist. Durch Vorsehen einer Schnellverbindung kann der modulare Aufbau des Reformers und der Austausch einer Funktionseinheit benutzerfreundlich und schnell durchgeführt werden, ohne dass eine aufwendige Demontage des Reformers erforderlich ist.

Insbesondere ist dabei vorgesehen, dass die Schnittstelle eine Bajonettverbindung ist.

Ferner wird erfindungsgemäß eine Funktionseinheit für einen Reformer, mit einer Schnittstelle, die zur Kopplung mit solch einem Reformer ausgelegt ist, bereitgestellt. Mit dieser Funktionseinheit sind die vorstehend beschriebenen Vorteile in übertragener Weise erreichbar.

Darüber hinaus stellt die Erfindung ein Brennstoffzellensystem mit solch einem Reformer und ein Kraftfahrzeug mit solch einem Brennstoffzellensystem bereit, welche die vorstehend genannten Vorteile in übertragener Weise liefern.

Eine bevorzugte Ausführungsform der Erfindung wird nachfolgend anhand der Figur beispielhaft erläutert.

Es zeigt:

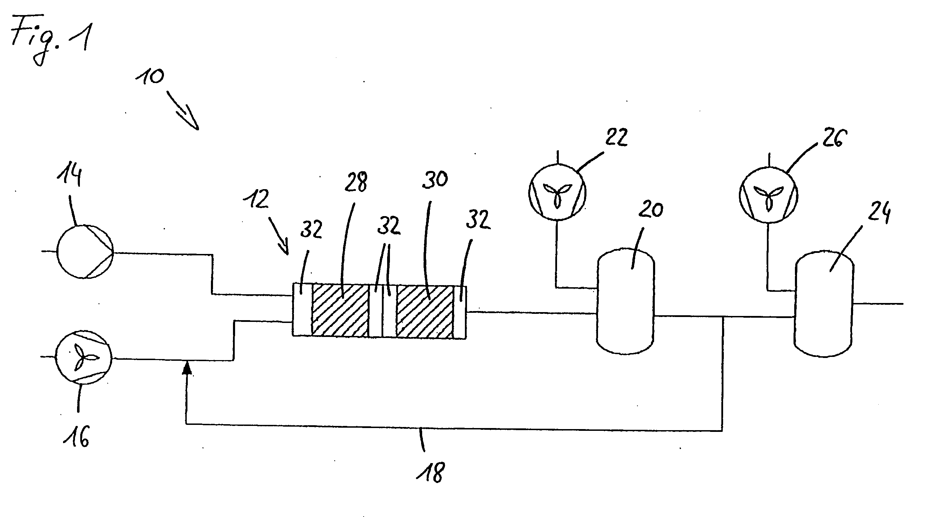

Figur 1 eine schematische Darstellung des erfindungsgemäßen Brennstoffzellensystems.

Figur 1 zeigt eine schematische Darstellung des erfindungsgemäßen Brennstoffzellensystems. Das Brennstoffzellensystem 10 umfasst einen Reformer 12, dem von einer Brennstoffpumpe 14 Brennstoff zugeführt wird. Als Brennstoffarten kommen Diesel, Benzin, Biogas, Erdgas, und weitere aus dem Stand der Technik bekannten Brennstoffarten in Frage. Weiterhin wird dem Reformer 12 Oxidationsmittel zugeführt, das sich im dargestellten Fall aus von einem Gebläse 16 geförderter Luft und darin eingebrachtem Anodenabgas 18 zusammensetzt. Das Anodenabgas 18 wird von einer Brennstoffzelle 20 erzeugt, der ein Brennstoffzellengebläse 22 zugeordnet ist und der von dem Reformer 12 erzeugtes Reformat zugeführt wird. Bei dem Reformat handelt es sich um ein wasserstoffhaltiges Gas, das in der Brennstoffzelle 20 mit Hilfe von durch das Brennstoffzellengebläse 22 geförderter Katodenluft zu Strom und Wärme umgesetzt wird. Im dargestellten Fall wird der nicht zurückgeführte Teil des Anodenabgases 18 einem Nachbrenner 24 zugeführt, dem ein Nachbrennergebläse 26 zugeordnet ist. In dem Nachbrenner 24 erfolgt eine Umsetzung des abgereicherten Reformats mit durch das Nachbrennergebläse 26 geförderter Luft zu einem Verbrennungsabgas, das nahezu keine Schadstoffe enthält.

Der Reformer 12 umfasst eine Gasgemischbildungseinheit 28 und eine Reaktionseinheit 30. In der Gasgemischbildungseinheit 28 wird aus dem Brennstoff und einem Oxidationsmittel, vorzugsweise Luft, ein gasförmiges Gemisch gebildet, vorzugsweise unter Verdampfung des Brennstoffes. Dieses gasförmige Gemisch reagiert in der Reaktionseinheit 30 zu Reformat, vorzugsweise durch partielle Oxidation. Dabei ist die Gasgemischbildungseinheit 28 vorzugsweise ein Verdampfer und die Reaktionseinheit 30 vorzugsweise ein Reformerbrenner. Die Gasgemischbildungseinheit 28 sowie die Reaktionseinheit 30 werden mittels Schnittstellen 32, die vorzugsweise als Schnellverbindungen ausgebildet sind, wie beispielsweise einer Bajonettverbindung, einer Schraubverbindung oder einer einrastenden Steckverbindung, mit dem Reformer bzw. mit den übrigen Funktionseinheiten des Reformers gekoppelt. Unter Schnellverbindung ist dabei eine mechanische, lösbare sowie form- oder kraftschlüssige Verbindung zu verstehen, mit der die Kopplung vorzugsweise ohne zusätzliche Werkzeuge durchführbar ist. Dadurch ist der Reformer in lösbare Module unterteilt, die bei Bedarf einfach und bedienerfreundlich austauschbar sind. Der Reformer und somit das gesamte Brennstoffzellensystem ist in dieser Konfiguration auf eine bestimmte Brennstoffart abgestimmt. Sollte eine Umrüstung auf eine andere Brennstoffart erforderlich werden, so können die Funktionseinheiten des Reformers, welche auf eine bestimmte Brennstoffart abgestimmt sind, gegen andere Funktionseinheiten ausgetauscht werden, welche vorzugsweise die gleiche Funktion erfüllen, jedoch auf eine andere Brennstoffart abgestimmt sind. Für diese Zwecke sind die Schnittstellen der Funktionseinheiten, die auf verschiedene Brennstoffarten abgestimmt sind und gegeneinander austauschbar sein sollen, vorzugsweise mit identischen Schnittstellen ausgestattet, so dass alle gegeneinander austauschbaren Funktionseinheiten hinsichtlich Abmessungen und Anschlüssen optimal in bzw. an den Reformer bzw. die übrigen Funktionseinheiten passen.

Hinsichtlich der Kopplung der Funktionseinheiten untereinander oder mit dem Reformer existieren verschiedene Möglichkeiten. Beispielsweise kann der Reformer aus mehreren hintereinander in Reihe gekoppelten Funktionseinheiten aufgebaut sein, so dass eine Schnittstelle einer endständigen Funktionseinheit den Eingang des Reformers bildet. Die andere Schnittstelle dieser endständigen Funktionseinheit ist mit einer nachfolgenden Funktionseinheit gekoppelt. Diese Funktionseinheit kann wiederum mit einer Funktionseinheit gekoppelt sein bis die Schnittstelle der letzten Funktionseinheit einen Ausgang des Reformers bildet. Eine andere Möglichkeit besteht darin, dass ein Reformergehäuse vorgesehen ist, welches jeweils gehäuseseitige Schnittstellen aufweist, an welche die Funktionseinheiten mittels ihrer Schnittstellen gekoppelt werden. Für die Verbindung der Funktionseinheiten im Betriebsfall untereinander müssten bei dieser Ausgestaltung die gehäuseseitigen Schnittstellen innerhalb des Reformergehäuses verbunden sein.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Brennstoffzellensystem
- 12: Reformer
- 14: Brennstoffpumpe
- 16: Gebläse
- 18: Anodenabgas
- 20: Brennstoffzelle
- 22: Brennstoffzellengebläse
- 24: Nachbrenner
- 26: Nachbrennergebläse
- 28: Gasgemischbildungseinheit
- 30: Reaktionseinheit
- 32: Schnittstellen

## Patentansprüche

1. Reformer (12) für ein Brennstoffzellensystem (10) zum Erzeugen eines Reformats, umfassend mehrere Funktionseinheiten (28, 30) zum Behandeln des Brennstoffs, wobei zumindest eine Funktionseinheit (28, 30) auf eine erste Brennstoffart abgestimmt ist, **dadurch gekennzeichnet, dass** die auf die erste Brennstoffart abgestimmte Funktionseinheit (28, 30) als lösbares Modul mittels einer Schnittstelle (32) mit dem Reformer (12) koppelbar ist, welche auch dazu ausgelegt ist, eine Austauschfunktionseinheit anstelle der auf die erste Brennstoffart abgestimmten Funktionseinheit (28, 30) mit dem Reformer (12) zu koppeln, wobei die Austauschfunktionseinheit auf eine zweite Brennstoffart abgestimmt ist, die sich von der ersten Brennstoffart unterscheidet.

2. Reformer (12) gemäß Anspruch 1, **dadurch gekennzeichnet, dass** die auf die erste Brennstoffart abgestimmte Funktionseinheit und die Austauschfunktionseinheit eine Gasgemischbildungseinheit (28) ist.

3. Reformer (12) gemäß Anspruch 2, **dadurch gekennzeichnet, dass** die Gasgemischbildungseinheit (28) ein Verdampfer ist.

4. Reformer gemäß Anspruch 1, **dadurch gekennzeichnet, dass** die auf die erste Brennstoffart abgestimmte Funktionseinheit und die Austauschfunktionseinheit eine Reäktionseinheit (30) ist.

5. Reformer gemäß Anspruch 4, **dadurch gekennzeichnet, dass** die Reaktionseinheit (30) ein Reformerbrenner ist.

6. Reformer gemäß einem der vorhergehenden Ansprüche, **dadurch gekennzeichnet, dass** die Schnittstelle (32) eine Schnellverbindung ist.

7. Reformer gemäß Anspruch 6, **dadurch gekennzeichnet, dass** die Schnittstelle (32) eine Bajonettverbindung ist.

8. Funktionseinheit (28, 30) für einen Reformer (12), mit einer Schnittstelle (32), die zur Kopplung mit dem Reformer gemäß Anspruch 1 ausgelegt ist.

9. Brennstoffzellensystem (10) mit einem Reformer (12) gemäß einem der vorhergehenden Ansprüche.

10. Kraftfahrzeug mit einem Brennstoffzellensystem (10) gemäß Anspruch 8.

## Claims

1. A reformer (12) for a fuel cell system (10) for generating a reformate, comprising a plurality of function units (28, 30) for treating the fuel, at least one function unit (28, 30) being adapted to a first type of fuel, **characterized in that** the function unit (28, 30) adapted to the first type of fuel can be releasably coupled to the reformer (12) as a module by means of an interface (32) which is also designed to couple to the reformer (12) a replacement function unit instead of the function unit (28, 30) adapted to the first type of fuel, the replacement function unit being adapted to a second type of fuel different from the first type of fuel.

2. The reformer (12) as set forth in claim 1, **characterized in that** the function unit (28, 30) adapted to the first type of fuel and the replacement function unit is a gas mixer (28).

3. The reformer (12) as set forth in claim 2, **characterized in that** the gas mixer (28) is an evaporator.

4. The reformer as set forth in claim 1, **characterized in that** the function unit adapted to the first type of fuel and the replacement function unit is a reaction unit (30).

5. The reformer as set forth in claim 4, **characterized in that** the reaction unit (30) is a reformer burner.

6. The reformer as set forth in any of the preceding claims, **characterized in that** the interface (32) is a quick-release connector.

7. The reformer as set forth in claim 6, **characterized in that** the interface (32) is a bayonet connector.

8. A function unit (28, 30) for a reformer (12) comprising an interface (32) designed for coupling the reformer as set forth in claim 1.

9. A fuel cell system (10) comprising a reformer (12) as set forth in any of the preceding claims.

10. A motor vehicle comprising a fuel cell system (10) as set forth in claim 9.

## Revendications

1. Réformateur (12) pour un système de piles à combustible (10), pour produire un réformat, comprenant plusieurs unités fonctionnelles (28, 30) pour traiter le combustible, au moins une unité fonctionnelle (28, 30) étant adaptée à une première espèce de combustible, **caractérisé en ce que** l'unité fonctionnelle (28, 30) adaptée à la première espèce de combustible peut être couplée en tant que module déliable au réformateur (12) au moyen d'une liaison (32) qui est également conçue à coupler au réformateur (12) une unité fonctionnelle de remplacement au lieu de l'unité fonctionnelle (28, 30) adaptée à la première espèce de combustible, l'unité fonctionnelle de remplacement étant adaptée à une deuxième espèce de combustible qui diffère de la première espèce de combustible.

2. Réformateur (12) selon la revendication 1, **caractérisé en ce que** l'unité fonctionnelle (28, 30) adaptée à la première espèce de combustible et l'unité fonctionnelle de remplacement est une unité de formation de mélange de gaz (28).

3. Réformateur (12) selon la revendication 2, **caractérisé en ce que** l'unité de formation de mélange de gaz (28) est un évaporateur.

4. Réformateur (12) selon la revendication 1, **caractérisé en ce que** l'unité fonctionnelle (28, 30) adaptée à la première espèce de combustible et l'unité fonctionnelle de remplacement est une unité de réaction (30).

5. Réformateur (12) selon la revendication 4, **caractérisé en ce que** l'unité de réaction (30) est un brûleur de réformateur.

6. Réformateur (12) selon l'une des revendications précédentes, **caractérisé en ce que** la liaison (32) est un connecteur rapide.

7. Réformateur (12) selon la revendication 1, **caractérisé en ce que** la liaison (32) est un connecteur à baïonnette.

8. Unité fonctionnelle (28, 30) pour un réformateur, comportant une liaison (32) qui est conçue à être couplée au réformateur.

9. Système de piles à combustible (10) comportant un réformateur (12) selon l'une des revendications précédentes.

10. Véhicule automobile comportant un système de piles à combustible (10) selon la revendication 9.
